# FASCICULE DE BREVET EUROPEEN

(11) **EP 2 135 523 B1**
(45) Date de publication et mention de la délivrance du brevet: **06.08.2014**
(21) Numéro de dépôt: 09162515.2
(22) Date de dépôt: 11.06.2009
(51) Int. Cl.: A45D 34/02, B05D 5/06, B05D 7/22, C03C 17/00, C03C 17/30, A45D 34/00

(54) **Procédé de décoration d'un flacon transparent ou translucide**
Dekorationsverfahren eines durchsichtigen oder lichtdurchlässigen Flakons
Method for decorating a transparent or translucent flask

(30) Priorité: 15.12.2008 FR 0807039; 16.06.2008 FR 0803351
(43) Date de publication de la demande: 23.12.2009
(73) Titulaire: Pochet du Courval, 75010 Paris (FR)
(72) Inventeur: Gourde, Armel, 80220, GAMACHES (FR); Clark, Jonathan, 80132, LE TITRE (FR)
(74) Mandataire: Derambure, Christian

(56) Documents cités:
- EP-A- 1 552 764
- WO-A-03/007868

## Description

La présente invention concerne un procédé de décoration d'un flacon transparent ou translucide, en verre ou en matière plastique, destiné au domaine de la cosmétique, par la réalisation d'un revêtement interne afin de réaliser un décor à l'intérieur du flacon. Ledit revêtement interne étant tel que le contenu du flacon, parfum, crème au autre, soit protégé contre toute migration éventuelle nuisible à sa qualité, comme par exemple nuisible à sa fragrance et/ou sa coloration ainsi qu'à sa conservation.
L'esthétique de tels produits est, de nos jours, un élément important de choix pour les acheteurs. Aussi, quel que soit le domaine dans lequel ils exercent, les fabricants cherchent à donner à leurs produits la meilleure esthétique possible, de façon à provoquer un réflexe d'achat par les consommateurs.

Le domaine de la mode, de la bijouterie, de la cosmétique, et de la parfumerie sont, bien entendu, très concernés par l'esthétique des produits, notamment de leur conditionnement, et tout un chacun a pu constater que, particulièrement les parfumeurs, cherchent à attirer la clientèle par des flacons qui se différencient de la concurrence en proposant leurs parfums dans des flacons de plus en plus esthétiques et originaux dans leurs formes et leurs décors.

On connaît déjà des procédés de décoration d'un flacon transparent ou translucide selon lesquels, la décoration est réalisée à l'intérieur du flacon, grâce à une laque de couleur qui est pulvérisée à l'intérieur du flacon. Ce procédé est divulgué par exemple par le brevet FR 2 851 940. Grâce à ce procédé, il est possible de réaliser un décor intérieur comprenant, par exemple, une seule couche de revêtement décoratif, voire plusieurs couches. Les laques utilisées sont des laques époxy ou polyuréthane liquides, ou des laques réalisées à l'aide de poudre sans solvant de type époxy, polyuréthane, polyester, voire polyéthylène et ses dérivés. Toutefois ce type de décoration, s'il permet de réaliser de magnifiques décorations, pose un problème car la plupart des parfums susceptibles de remplir les flacons ainsi décorés, peuvent présenter une incompatibilité avec la nature de la ou des couches de décoration qui peuvent polluer et dégrader ces parfums. Une solution à ce problème consiste à procéder en une étape finale au dépôt d'une couche de nature à faire barrage à la migration vers le parfum des ingrédients néfastes des couches de laques.

On connaît aussi de la demande de brevet FR 2 889 485, un procédé selon lequel la ou les couches de décoration internes est une couche en émail. Toutefois ce type de procédé présente l'inconvénient d'avoir à procéder à une cuisson par un chauffage à une température importante par exemple 800 °C, ce qui rend le procédé coûteux et inutilisable pour des flacons en matière plastique.

EP 1 552 764 A divulgue aussi un procédé de décoration d'un flacon.

On entendra par flacon, tout type de conditionnement pour produits cosmétiques tels que parfum, eau de Cologne, crème et autres.

L'invention propose un nouveau procédé de décoration selon la revendication 1 permettant la décoration d'un flacon selon la revendication 14 par l'intérieur, ce qui permet d'obtenir un décor particulièrement élégant et dont le produit cosmétique est protégé des agressions grâce à une couche faisant barrage en isolant ledit produit, ledit flacon pouvant être en verre ou en matière plastique.

Selon le procédé de l'invention, la décoration est réalisée à l'intérieur de ce dernier, de façon à recouvrir la surface intérieure d'un décor, constitué par un revêtement interne en contact avec le produit cosmétique. Selon le procédé de décoration, il est réalisé au moins une couche de décoration sachant, comme on le verra plus loin, que la décoration peut être réalisée grâce à plusieurs couches de revêtement, dont la couche en contact permanent avec le parfum est la couche interne inerte. Cette dernière a des propriétés proche du verre.

Ainsi, le procédé de décoration d'un flacon transparent ou translucide en verre ou en matériau plastique destiné au domaine de la cosmétique, pour contenir un liquide tel qu'un parfum, ou similaire, selon l'invention, est caractérisé en ce que la décoration est réalisée à l'intérieur du flacon, grâce à la réalisation d'au moins une couche décorative interne par pulvérisation. Cette couche étant inerte chimiquement de caractéristique proche du verre, permet d'isoler le parfum.

Selon l'invention la couche interne inerte en contact avec le parfum, déposée intérieurement est une couche d'un produit inorganique à base de Silice et pigments, et est un polymère inorganique réalisé par le procédé "SOLGEL", La couche ainsi déposée est un polymère inerte dont les caractéristiques sont proches du verre.

La couche décorative formant le revêtement interne, est réalisée par pulvérisation à l'intérieur du flacon d'un liquide coloré ou non, directement sur le verre (ou le plastique dans le cas d'un flacon en matière plastique), à l'aide d'un pistolet pneumatique basse pression qui comporte une rallonge pouvant s'introduire à l'intérieur du flacon, portant à son extrémité une buse de pulvérisation. Pendant la pulvérisation, on met en mouvement relatif la buse et le flacon afin de déposer une couche homogène. Ainsi la buse de pulvérisation peut être déplacée verticalement en tournant sur elle-même. Mais on peut aussi déplacer verticalement la buse et faire tourner le flacon autour de l'axe constitué par la buse. Mais l'on pourrait aussi mettre en mouvement le flacon, en le déplaçant verticalement et en le faisant tourner par rapport à la buse de pulvérisation.

La pulvérisation interne se fait sur un flacon chaud, ainsi dans une étape précédant l'étape de pulvérisation, il est procédé au chauffage du flacon le chauffage pouvant être fait, par exemple, par air chaud ou passage en étuve, de façon à amener le flacon à une température d'environ 40 à 50°C.

Notons que la pulvérisation faite grâce à la buse de pulvérisation introduite dans le flacon par son embouchure, est telle que la buse disposée à l'extrémité d'un tube de pulvérisation, est constituée avantageusement par une canalisation centrale comprenant, un ensemble de trous radiaux reliés à un réservoir contenant le produit à pulvériser. Bien entendu, la buse de pulvérisation peut avoir toute autre construction.

La pulvérisation se fait donc avec un liquide à température ambiante dans un flacon chaud, Dans une étape supplémentaire faisant suite à l'étape de pulvérisation, il est procédé à un séchage puis à un refroidissement.

On a compris que la pulvérisation du liquide se fait dans un flacon chauffé avant sa pulvérisation pour améliorer l'accrochage de la couche de décor sur la surface interne du flacon.

Selon le procédé de l'invention, on peut, par exemple, préalablement à la couche définie précédemment, procéder à la réalisation d'un ou de plusieurs couches de décor préalable, cette couche ou ces couches étant alors pris ou prisent en sandwich entre la couche de décor finale et la paroi interne du flacon.

Ainsi, et par exemple, on peut pulvériser un liquide ou une poudre d'une première couleur (C1) pour former une première couche de décors de couleur ayant une première couleur (C1). Puis, dans une étape intermédiaire, on peut détruire la couche dans des zones déterminées, et ce, par exemple, par méthode laser. Dans cette opération de destruction de la couche, on peut faire un marquage sans couleur, puis, on pulvérise dans le flacon un liquide ou une poudre d'une deuxième couleur (C2), pour réaliser une deuxième couche de décor ayant la deuxième couleur. Cette deuxième couche ne sera visible de l'extérieur que dans les zones ou la première couche de première couleur a été détruite. On pourra ainsi, et ce, grâce au procédé, réaliser des décors de différentes couleurs, ou détruire, par exemple, par laser, la ou les couches de décor interne, pour laisser une zone sans décor, afin de rendre visible le niveau du contenu du flacon. On appliquera ensuite la couche finale inerte, couche finale en contact permanent avec le contenu, afin de garantir aucune migration dans le temps des produits chimiques ou colorants contenus dans la couche de décor et le produit contenu dans le flacon.

Ajoutons que le procédé permet aussi de réaliser un décor interne avec, par exemple, trois couches de couleurs différentes, et qu'en fonction de ces couches il sera possible de détruire seulement la première couche pour laisser apparaître dans ces zones détruites la deuxième couche, tandis que les deux premières couches pourraient être détruites dans d'autres zones, pour laisser apparaître la troisième couche, le laser ne détruisant que les couches de laque avec pigments.

Selon un autre mode d'exécution, on réalise un décor interne par plus de deux couches de couleurs différentes et l'on détruit seulement la première couche pour laisser apparaître dans ces zones détruites la deuxième couche, tandis que les deux premières couches sont détruites dans d'autres zones pour laisser apparaître la troisième couche.

L'invention concerne aussi le flacon décoré selon le procédé de l'invention, qui est caractérisé en ce qu'il comprend un décor intérieur, tandis qu'il est avantageusement en verre, mais peut être en matière plastique comme, par exemple, en polyesters thermoplastiques (PET, PET-A, PET-G,....), en polyméthacrylate de méthyle (PMMA), en polyoléfine tel qu'en polyéthylène (PE ou PE-HD polyéthylène à haute densité) ou polypropylène (PP), polystyrène (PS) ou en acrylique ou encore en matériau hybride, tel que, par exemple, en matériau commercialisé sous la marque déposée Surlyn ®, ou Abcite ®.

La couche de revêtement interne faisant barrage, à la détérioration du contenu du flacon, est inorganique, et comme nous l'avons vu précédemment obtenue par la méthode dite SOLGEL, le produit comprend une matrice de silice ( de 50 à 95 %, préférentiellement 90 %) et des minéraux tels que du Zircon, du Titan, ou d'un mélange de ceux ci. Les pigments ajoutés à la matrice de silice sont, par exemple, des pigments de colorations destinés à colorer la couche interne. Ces pigments ont, par exemple un mélange d'oxydes métalliques tels que de l'oxyde de bismuth, de l'oxyde de zinc, de l'oxyde d'étain, de cuivre , de chrome de sodium et d'alumine. Les pigments destinés à la coloration de la couche sont aussi, et, par exemple, de l'aluminate de cobalt, du noir de carbone voire du graphite. Les pigments sont : soit des pigments inorganiques, soit de pigments organiques qui sont emprisonnés dans la matrice à base de silice de la couche, et ainsi lesdits pigments ne peuvent pas migrer dans le contenu du flacon. Le liquide pulvérisé, pour réaliser la couche interne en contact avec le contenu du flacon, est un polymère inorganique, qui grâce au procédé SOLGEL est obtenu par des réactions chimiques simples et à une température proche de la température ambiante (20 à 150 °C). La synthèse est effectuée à partir d'alcoolats (liquide provenant de la distillation de l'alcool sur des substrats aromatiques), de silicium et d'un groupement organique alkyle (molécules dérivées des hydrocarbures (alcanes) ne comportant que des liaisons covalentes simples). Les réactions de base s'effectuent autour de la température ambiante, il est donc possible d'associer des parties organiques à la partie minérale sans qu'elles subissent de dégradation thermique ultérieure. Cela consiste à dissoudre la partie organique dans le solvant de synthèse. Le gel minéral se forme alors en tenant compte de la présence des molécules invitées. Une limitation de cette approche est la proportion faible d'organique inséré dans le réseau minéral. La seconde possibilité consiste à utiliser des précurseurs comportant à la fois des fonctions hydrolysables qui génèrent le réseau silicaté et des fonctions organiques qui restent greffées au squelette minéral. Ces chaînons organiques sont liés au silicium via une liaison Si-C qui est insensible à l'hydrolyse. Selon sa nature, la partie organique peut jouer le rôle de formateur ou de modificateur par analogie aux formateurs et aux modificateurs des verres élaborés à haute température.

Bien entendu, l'invention n'est pas limitée aux modes de réalisation décrits, mais elle comprend aussi tous les équivalents techniques ainsi que leurs combinaisons qui ne sortent pas du cadre de l'invention.

## Revendications

1. Procédé de décoration d'un flacon transparent ou translucide en verre ou en matériau plastique destiné au domaine de la cosmétique pour contenir un produit cosmétique tel qu'un parfum ou similaire et dont la décoration est réalisée à l'intérieur du flacon, dans lequel il est réalisé au moins une couche de décoration sur la surface intérieure du flacon par pulvérisation à l'intérieur du flacon,
**caractérisé en ce qu'** on pulvérise un produit liquide à l'intérieur du flacon qui réalise un revêtement interne formé par une couche de décoration interne en contact avec le produit cosmétique d'un produit polymére inorganique qui comprend une matrice à base de silice et des pigments ajoutés à la matrice de silice et emprisonnés dans la matrice à base de silice et ne pouvant migrer dans le contenu du flacon, réalisé par le procédé sol-gel, inerte chimiquement et de caractéristique proche du verre, le revêtement interne faisant barrage en isolant ledit produit, pour protéger le produit cosmétique de toute migration éventuelle nuisible à sa qualité, comme par exemple sa fragrance et/ou sa coloration ainsi qu'à sa conservation.

2. Procédé selon la revendication 1, **caractérisé en ce que** les pigments ajoutés à la matrice à base de silice sont des pigments de coloration.

3. Procédé selon la revendication 2, **caractérisé en ce que** les pigments de coloration ajoutés à la matrice à base de silice sont des pigments inorganiques.

4. Procédé selon la revendication 2, **caractérisé en ce que** les pigments de coloration ajoutés à la matrice à base de silice sont des pigments organiques.

5. Procédé selon l'une quelconque des revendications 1 à 4, **caractérisé en ce que** la couche de décoration interne inerte en contact avec le produit cosmétique et faisant barrage est une couche d'un produit polymère inorganique qui comprend une matrice à base de silice et des minéraux tels que du zircon ou du titane.

6. Procédé selon l'une quelconque des revendications 1 à 5, caractérisé en ce l'on pulvérise le liquide pour réaliser la couche de décoration interne inerte faisant barrage à température ambiante dans le flacon chaud et, dans une étape précédant la pulvérisation, il est procédé au chauffage du flacon.

7. Procédé selon la revendication 6, **caractérisé en ce qu'**après la pulvérisation du liquide pour réaliser la couche de décoration interne inerte faisant barrage, il est procédé à un séchage puis à un refroidissement.

8. Procédé selon l'une quelconque des revendications 1 à 7, **caractérisé en ce qu'**il est réalisé seulement une couche de décoration sur la surface intérieure du flacon et **en ce que** la couche de décoration interne inerte faisant barrage forme le revêtement interne réalisé directement sur le verre ou la matière plastique.

9. Procédé selon l'une quelconque des revendications 1 à 7, **caractérisé en ce que** préalablement à la pulvérisation du produit liquide pour réaliser la couche de décoration interne inerte faisant barrage, il est procédé à la réalisation d'une ou plusieurs couches de décor, prise ou prises en sandwich entre la paroi interne du flacon et la couche dé décor finale.

10. Procédé selon la revendication 9, **caractérisé en ce qu'**une couche de décor est une couche de laque avec pigments.

11. Procédé selon l'une quelconque des revendications 9 à 10, **caractérisé en ce que** pour former une couche de décor, on pulvérise un liquide ou une poudre.

12. Procédé selon l'une quelconque des revendications 9 à 11, **caractérisé en ce qu'**on forme une couche de décor, puis on détruit la couche dans des zones déterminées, en particulier par méthode laser, et on applique la couche finale inerte.

13. Procédé selon l'une quelconque des revendications 9 à 11, **caractérisé en ce qu'**on réalise un décor interne par plus de deux couches de couleurs différentes, tandis que les deux premières couches sont détruites dans d'autres zones pour laisser apparaître la troisième couche.

14. Flacon destiné au domaine de la cosmétique pour contenir un produit cosmétique tel qu'un parfum ou similaire et dont la décoration est réalisée à l'intérieur, le flacon étant transparent ou translucide, en verre ou en matière plastique, avec un revêtement interne comprenant au moins une couche de décoration sur la surface intérieure, la couche de décoration interne en contact avec le produit cosmétique étant d'un produit polymère inorganique qui comprend une matrice à base de silice et des pigments ajoutés à la matrice de silice emprisonnés dans la matrice à base de silice et ne pouvant migrer dans le contenu du flacon, obtenu par pulvérisation d'un produit liquide, réalisé par le procédé sol-gel, inerte chimiquement et de caractéristique proche du verre, cette couche de décoration faisant barrage en isolant ledit produit, pour protéger le produit cosmétique de toute migration éventuelle nuisible à sa qualité, comme par exemple nuisible à sa fragrance et/ou sa coloration ainsi qu'à sa conservation.

15. Flacon selon la revendication 14, **caractérisé en ce que** les pigments sont des pigments de coloration.

16. Flacon selon la revendication 15, **caractérisé en ce que** les pigments de coloration sont des pigments inorganiques.

17. Flacon selon la revendication 16, **caractérisé en ce que** les pigments de coloration sont des pigments organiques.

18. Flacon selon la revendication 14, **caractérisé en ce que** les pigments sont des oxydes métalliques, de l'aluminate de cobalt, du noir de carbone, du graphite.

19. Flacon selon l'une quelconque des revendications 14 à 18, **caractérisé en ce que** la couche de décoration interne inerte en contact avec le produit cosmétique et faisant barrage est une couche d'un produit polymère inorganique qui comprend une matrice à base de silice et des minéraux tels que du zircon ou du titane.

20. Flacon selon l'une quelconque des revendications 14 à 19, **caractérisé en ce qu'**il comporte seulement une couche de décoration sur la surface intérieure du flacon, **en ce que** la couche de décoration interne inerte en contact avec le produit cosmétique et faisant barrage forme le revêtement interne réalisé directement sur le verre ou la matière plastique.

21. Flacon selon l'une quelconque des revendications 14 à 19, **caractérisé en ce qu'**il comprend une ou plusieurs couches de décors, prise ou prises en sandwich entre la paroi interne du flacon et la couche de décor finale.

22. Flacon selon la revendication 21, **caractérisé en ce que** la une ou plusieurs couches de décors est ou sont des laques avec pigments.

## Patentansprüche

1. Dekorationsverfahren eines transparenten oder transluziden Flakons aus Glas oder aus Plastik, der für den Bereich der Kosmetik bestimmt ist, um ein kosmetisches Produkt zu entfalten, wie z. B. ein Parfüm oder dergleichen, und dessen Dekoration im Innern des Flakons realisiert wird, in dem wenigstens eine Dekorationsschicht auf der inneren Oberfläche des Flakons per Beschichtung im Innern des Flakons realisiert ist,
**dadurch gekennzeichnet, dass** ein flüssiges Produkt im Innern des Flakons versprüht wird, das eine innere Beschichtung realisiert, die durch eine innere, mit dem Polymerprodukt in Kontakt stehende Dekorationsschicht aus einem anorganischen Polymerprodukt gebildet wird, das eine Matrix auf Siliziumbasis und zu der Siliziumbasis hinzugefügte und in der Matrix auf Siliziumbasis eingeschlossene Pigment umfasst und nicht in den Inhalt des Flakons migrieren kann, das durch das chemisch inerte und kennzeichnende, dem Glas ähnliche Sol-Gel-Verfahren realisiert ist, wobei die innere Beschichtung eine Sperre bildet, indem das genannte Produkt isoliert wird, um das kosmetische Produkt vor jeglicher eventuellen, für seine Qualität , wie z. B. seine Duftnote und / oder seine Färbung sowie für seine Konservierung schädliche Migration zu schützen.

2. Verfahren gemäß Anspruch 1, **dadurch gekennzeichnet**, das die der Matrix auf Siliziumbasis hinzugefügten Pigmente Farbpigmente sind.

3. Verfahren gemäß Anspruch 2, **dadurch gekennzeichnet, dass** die zu der Matrix auf Siliziumbasis hinzugefügten Farbpigmente anorganische Pigmente sind.

4. Verfahren gemäß Anspruch 2, **dadurch gekennzeichnet, dass** die zu der Matrix auf Siliziumbasis hinzugefügten Farbpigmente organische Pigmente sind.

5. Verfahren gemäß Anspruch 1 bis 4, **dadurch gekennzeichnet, dass** die interne, inerte, sich mit dem kosmetischen Produkt in Kontakt befindende und eine Sperre bildende Dekorationsschicht eine Schicht aus einem anorganischen Polymerprodukt ist, die eine Matrix auf Siliziumbasis und Minerale, wie z. B. Zirkon oder Titan umfasst.

6. Verfahren gemäß Anspruch 1 bis 5, **dadurch gekennzeichnet, dass** die Flüssigkeit versprüht wird, um die interne, inerte, bei Raumtemperatur in dem warmen Flakon eine Sperre bildende Dekorationsschicht zu realisieren und in einer Stufe vor dem Besprühen, der Flakon erhitzt wird.

7. Verfahren gemäß Anspruch 6, **dadurch gekennzeichnet, dass** nach dem Besprühen der Flüssigkeit zur Realisierung der internen, inerten, eine Sperre bildende Dekorationsschicht ein Trocknen und dann ein Abkühlen durchgeführt werden.

8. Verfahren gemäß Anspruch 1 bis 7, **dadurch gekennzeichnet, dass** nur eine Dekorationsschicht auf der inneren Flächen des Flakons realisiert wird und dass die interne, inerte, eine Sperre bildende Dekorationsschicht die innere Beschichtung bildet, die direkt auf dem Glas oder dem Plastik realisiert ist.

9. Verfahren gemäß Anspruch 1 bis 7, **dadurch gekennzeichnet, dass** vor dem Versprühen des flüssigen Produkts zur Realisierung der internen, inerten, eine Sperre bildenden Dekorationsschicht die Realisierung von einer oder mehreren Dekorschicht(en) vorgenommen wird, die eingesetzt oder zwischen der inneren Wand des Flakons und der Enddekorschicht eingefügt ist.

10. Verfahren gemäß Anspruch 9, **dadurch gekennzeichnet, dass** eine Dekorschicht eine Lackschicht mit Pigmenten ist.

11. Verfahren gemäß Anspruch 9 oder 10, **dadurch gekennzeichnet, dass** eine Flüssigkeit oder ein Pulver versprüht wird, um eine Dekorschicht zu bilden.

12. Verfahren gemäß Anspruch 9 bis 11, **dadurch gekennzeichnet, dass** eine Dekorschicht gebildet wird, dann die Schicht in bestimmten Bereichen zerstört wird, insbesondere per Laserverfahren, und dann die inerte Erdschicht ausgetragen wird.

13. Verfahren gemäß Anspruch 9 bis 11, **dadurch gekennzeichnet, dass** ein Innendekor durch mehr als zwei Schichten unterschiedlicher Farben realisiert wird, während die zwei ersten Schichten in weiteren Bereichen zerstört werden, um die dritte Schicht erscheinen zu lassen.

14. Flakon, der für den Bereich der Kosmetik bestimmt ist, um ein kosmetisches Produkt zu enthalten, wie z. B. ein Parfüm oder dergleichen, und dessen Dekoration im Innern realisiert wird, wobei der Flakon transparent oder transluzid ist, aus Glas oder aus Plastik, mit einer inneren Beschichtung, die wenigstens eine Dekorationsschicht auf der inneren Oberfläche umfasst, wobei die innere Dekorationsschicht, die mit dem kosmetischen Produkt in Kontakt ist, ein anorganisches Polymerprodukt ist, das eine Matrix auf Siliziumbasis und zu der Matrix auf Siliziumbasis hinzugefügt, in der Matrix auf Siliziumbasis eingeschlossene Pigmente umfasst, die nicht in den Inhalt des Flakons migrieren können, per Aufsprühen eines flüssigen Produkt erhalten wird, das durch das Sol-Gel-Verfahren realisiert ist, chemisch inert ist und Glas ähnliche Merkmale aufweist, wobei diese Dekorationsschicht eine Sperre bildet, indem das genannte Produkt isoliert wird, um das kosmetische Produkt vor jeglicher eventueller, für seine Qualität, wie z. B. seine Duftnote und / oder seine Färbung sowie seiner Konservierung schädlicher Migration schützt.

15. Flakon gemäß Anspruch 14, **dadurch gekennzeichnet, dass** die Pigmente Farbpigmente sind.

16. Flakon gemäß Anspruch 15, **dadurch gekennzeichnet, dass** die Farbpigmente anorganische Pigmente sind.

17. Flakon gemäß Anspruch 16, **dadurch gekennzeichnet, dass** die Farbpigmente organische Pigmente sind.

18. Flakon gemäß Anspruch 14, **dadurch gekennzeichnet, dass** die Pigmente Metalloxide, Kobalt-Aluminatoxide, Kohlenschwarz, Graphit sind.

19. Flakon gemäß Anspruch 14 bis 18, **dadurch gekennzeichnet, dass** die interne, inerte, mit dem kosmetischen Produkt in Kontakt stehende und eine Sperre bildende Dekorationsschicht eine Schicht aus einem anorganischen Polymerprodukt ist, die eine Matrix auf Siliziumbasis und Mineralien, wie z. B. Zirkon oder Titan, umfasst.

20. Flakon gemäß Anspruch 14 bis 19, **dadurch gekennzeichnet, dass** er nur eine Dekorationsschicht auf der internen Fläche des Flakons umfasst, dass die interne, inerte, mit dem kosmetischen Produkt in Kontakt stehende und eine Sperre bildende Dekorationsschicht eine innere Beschichtung bildet, die direkt auf dem Glas oder dem Plastik realisiert ist.

21. Flakon gemäß Anspruch 14 bis 19, **dadurch gekennzeichnet, dass** er eine oder mehrere Dekorschicht(en) umfasst, die eingesetzt oder zwischen der inneren Wand des Flakons und der Enddekorschicht eingefügt ist / sind.

22. Flakon gemäß Anspruch 21, **dadurch gekennzeichnet, dass** die oder mehrere Dekorschicht(en) Lacke mit Pigmenten ist oder sind.

## Claims

1. A method for decorating a glass or plastic transparent or translucent bottle, for the cosmetic field, for containing a cosmetic product, such as a perfume or the like, a decoration of which is made inside the bottle, wherein it is performed at least one decorative layer on the inner surface of the bottle by spraying inside the bottle,
**Characterized in that** a liquid product is sprayed inside the bottle, which provides an inner coating formed by an inner decoration layer in contact with the cosmetic product from an inorganic polymer product, which comprises a silica-based matrix and pigments added to the silica-based matrix and trapped in the silica-based matrix and prevented from migrating in the content of the bottle, performed by the sol-gel process, chemically inert, and with glass-like features, the inner coating forming a barrier by isolating the product protesting the cosmetic product from any migration detrimental to its quality, such as for example its fragrance and/or colour as well as preserving the cosmetic prouduct.

2. The method according to claim 1, **characterized in that** the pigments added to the silica-based matrix are colour pigments.

3. The method according to claim 2, **characterized in that** the colour pigments added to the silica-based matrix are inorganic pigments.

4. The method according to claim 2, **characterized in that** the colour pigments added to the silica-based matrix are organic pigments.

5. The method according to any of claims 1 to 4, **characterized in that** the inert inner decoration layer in contact with the cosmetic product and forming a barrier is a layer of an inorganic polymer product which comprises a silica-based matrix and minerals such as zirconium or titanium.

6. The method according to any of claims 1 to 5, **characterized in that** the spraying of the liquid to form the inert inner decoration layer forming a barrier is done at room temperature into the bottle while hot and wherein, in a step preceding the spraying step, the bottle is heated.

7. The method according to claim 6, **characterized in that**, following the spraying of the liquid to provide the inert inner decoration layer forming a barrier, a drying and then a cooling are carried out.

8. The method according to any of claims 1 to 7, **characterized in that**, it is performed only one decorating layer on the inner face of the bottle, and **in that** the inert inner decoration layer forming a barrier provides the inner coating realized directly on the glass or plastic material.

9. The method according to any of claims 1 to 7, **characterized in that**, prior to spraying the liquid product to realize the inert inner decoration layer forming a barrier, one or more decorating layers are made, being sandwiched between a final decorating layer and the inner surface of the bottle.

10. The method according to claim 9, wherein at least one of the one or more decorating layers is lacquer with pigments.

11. The method according to any of claims 9 to 10, **characterized in that**, in order to provide a decorating layer, one sprays a liquid or a powder.

12. The method according to any of claims 9 to 11, **characterized in that** a decorating layer is formed, then the layer is destroyed in determined areas, in particular through a LASER method, and the inert final layer is applied.

13. The method according to any of claims 9 to 11, **characterized in that** an inner decorating is performed by more than two layers of different colours, whereas the first two layers are destroyed in other areas to let the third layer appear.

14. A bottle, for the cosmetic field, for containing a cosmetic product, such as a perfume or the like, a decoration of which is made inside the bottle, the bottle being transparent or translucent, in glass or plastic material, with an inner coating comprising at least one decorative layer on the inner surface, the inner decoration layer in contact with the cosmetic product being from an inorganic polymer product, which comprises a silica-based matrix and pigments added to the silica-based matrix and trapped in the silica-based matrix and prevented from migrating in the content of the bottle, obtained by spraying a liquid product, performed by the sol-gel process, chemically inert, and with glass-like features, the decoration layer forming a barrier by isolating the product protecting the cosmetic product from any migration detrimental to its quality, such as for example its fragrance and/or colour as well as preserving the cosmetic product.

15. Bottle according to claim 14, **characterized in that** the pigments are colour pigments.

16. Bottle according to claim 15, **characterized in that** the colour pigments are inorganic pigments.

17. Bottle according to claim 16, **characterized in that** the colour pigments are organic pigments.

18. Bottle according to claim 14, **characterized in that** the pigments are metal oxides, cobalt aluminate, carbon black, graphite.

19. Bottle according to any of claims 14 to 18, **characterized in that** the inert inner decoration layer in contact with the cosmetic product and forming a barrier is a layer of an inorganic polymer product which comprises a silica-based matrix and minerals such as zirconium or titanium.

20. Bottle according to any of claims 14 to 19, **characterized in that**, it comprises only one decoration layer on the inner face of the bottle, and **in that** the inert inner decoration layer in contact with the cosmetic product and forming a barrier provides the inner coating realized directly on the glass or plastic material.

21. Bottle according to any of claims 14 to 19, **characterized in that**, it comprises one or more decorating layers, being sandwiched between a final decorating layer and the inner surface of the bottle.

22. Bottle according to claim 21, **characterized in that** the at least one of the one or more decorating layers is or are lacquer with pigments.
